# EUROPEAN PATENT APPLICATION

(11) **EP 3 181 403 A1**
(43) Date of publication of application: **21.06.2017**
(21) Application number: 16167019.5
(22) Date of filing: 26.04.2016
(51) Int. Cl.: B60Q 1/32

(54) **VEHICLE WIRELESS WARNING APPARATUS AND METHOD OF CONTROLLING THE SAME**

(30) Priority: 17.12.2015 TW 104220268 U; 04.02.2016 TW 105103896
(71) Applicant: Zealio Electronics Co., Ltd., Hsinchu City (TW)
(72) Inventor: CHENG, Chia-Pao, Hsinchu City (TW); GUO, Pao-Lin, Hsinchu City (TW)
(74) Representative: Viering, Jentschura & Partner mbB Patent- und Rechtsanwälte

(57) **Abstract**

A vehicle wireless warning apparatus and a method of controlling the same are disclosed. The vehicle wireless warning apparatus (1) is installed on a vehicle door (100) and includes a sensing unit (22), a controller (21), and a display unit (23). The sensing unit (22) wirelessly senses the vehicle door (100) being in an open condition or in a closed condition and outputs a sensing signal (S_{SEN}) to the controller (21). The controller (21) compares the sensing signal (S_{SEN}) with a reference signal to output a display control signal (S_{CD}) to control the display unit (23). Therefore, the absence of malfunctions, the saving of time of installing the vehicle wireless warning apparatus (1) and the improvement of vehicle safety are achieved.

## Description

### 1. Technical Field

The present disclosure relates generally to a warning apparatus and a method of controlling the same, and more particularly to a vehicle wireless warning apparatus and a method of controlling the same.

### 2. Description of the Prior Arts

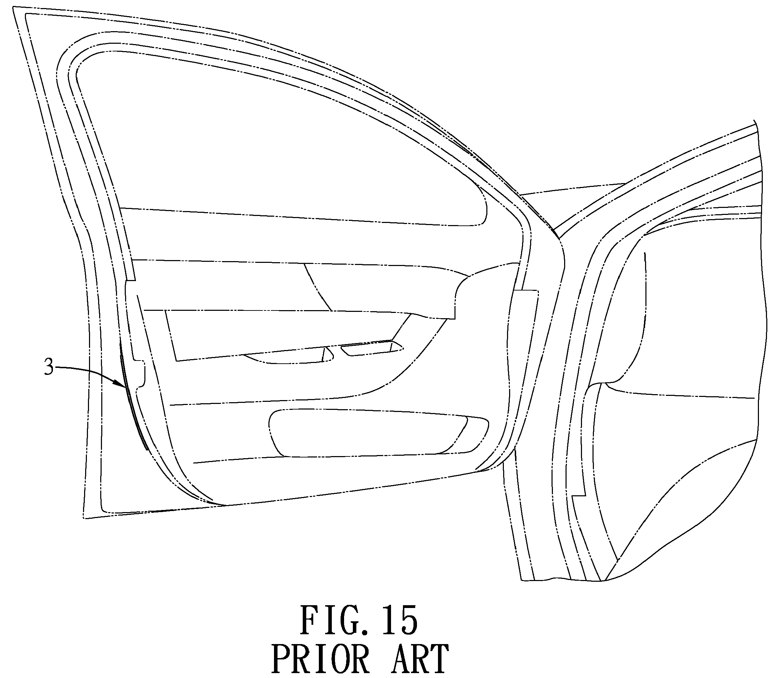

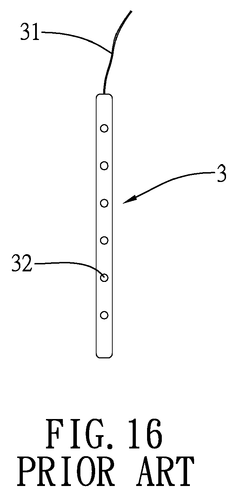

As shown in FIG. 15, a wired lighting device 3 installed on a frame edge of a vehicle door is used for illuminating and warning. As shown in FIG. 16, the wired lighting device 3 has an electric wire 31 and a main body having a plurality of light-emitting elements 32 thereon. The electric wire 31 is electrically connected to a vehicle control system and a vehicle power supply.

When the driver or the passenger opens the vehicle door, the vehicle control system detects the vehicle door being in an open condition. Afterward, the vehicle control system outputs a control signal to make the light-emitting elements 32 emit light via the electric wire 31, thus warning the rear vehicles and pedestrians.

The influence of the wired lighting device 3 on the vehicle is significant since the wired lighting device 3 is directly connected to the vehicle control system and the vehicle power supply via the electric wire 31. Once a short circuit occurs on the wired lighting device 3 due to ageing of the light-emitting elements 32 or a malfunction occurs due to electromagnetic interference, the vehicle control system as well as the wired lighting device 3 would be damaged due to unexpected signals generated from the wired lighting device 3 to affect the driving safety.

The wiring design and installation of the electric wire 31 require careful consideration since the resistance value of the electric wire 31 is inversely proportional to the square of the radius and proportional to the length of the electric wire 31 so that the resistance value of the electric wire 31 is correctly matched with the vehicle control system and the vehicle power supply.

Besides the safety consideration, the aesthetic design of the wired lighting device 3 is also essential. A difference between the actual resistance value and the estimated one exists, causing abnormal operations of the vehicle control system and affecting the vehicle performance and the driving safety when the electric wire 31 is installed on the vehicle door under the consideration of the aesthetic design.

In addition, a lot of time is spent installing the wired lighting device 3 since a variety of considerations of designing and arranging the electric wire 31 such that the efficiency of vehicle production is decreased.

An objective of the present disclosure is to provide a vehicle wireless warning apparatus to solve problems of malfunctions caused by circuit faults or circuit interferences of the wired lighting device, prolonged time of installing the wired lighting device, and unsafe vehicle operations.

In order to achieve the above-mentioned objective, the vehicle wireless warning apparatus installed on a vehicle door includes a sensing unit, a controller, a display unit and a battery unit. The sensing unit wirelessly senses the vehicle door being in an open condition or in a closed condition and accordingly outputs a sensing signal. The controller includes a control unit, and the control unit generates a reference signal, receives the sensing signal and compares the sensing signal with the reference signal to output a display control signal. The display unit is controlled by the display control signal received from the control unit. The battery unit is connected to the sensing unit, the controller and the display unit, and supplies required power to the sensing unit, the controller and the display unit.

Another objective of the present disclosure is to provide a method of controlling a vehicle wireless warning apparatus installed on a vehicle door to solve problems of malfunctions caused by circuit faults or circuit interferences of the wired lighting device, prolonged time of installing the wired lighting device, and unsafe vehicle operations.

In order to achieve the above-mentioned objective, the method includes steps of: wirelessly sensing the vehicle door being in an open condition or in a closed condition to acquire a sensing signal; comparing the sensing signal with a reference signal to acquire a display control signal; and controlling a display unit of the vehicle wireless warning apparatus according to the display control signal.

Accordingly, the vehicle wireless warning apparatus and the method of controlling the same have advantages of: the absence of malfunctions caused by circuit fault(s) or circuit interference(s), the shortening time of installing the vehicle wireless warning apparatus, and the improvement of vehicle safety since the vehicle wireless warning apparatus is separated from the vehicle control system and the vehicle power supply.

It is to be understood that both the foregoing general description and the following detailed description are exemplary, and are intended to provide further explanation of the present disclosure as claimed. Other advantages and features of the present disclosure will be apparent from the following description, drawings and claims.

### IN THE DRAWINGS

The features of the present disclosure believed to be novel are set forth with particularity in the appended claims. The present disclosure itself, however, may be best understood by reference to the following detailed description of the present disclosure, which describes an exemplary embodiment of the present disclosure, taken in conjunction with the accompanying drawings, in which:
FIG. 1 is a schematic structural view of a vehicle wireless warning apparatus according to a first embodiment of the present disclosure;
FIG.2 is a block diagram of the vehicle wireless warning apparatus according to the first embodiment of the present disclosure;
FIG.3 is a schematic structural view of a light-emitting element of the vehicle wireless warning apparatus according to the first embodiment of the present disclosure;
FIG.4 is a schematic structural view of another light-emitting element of the vehicle wireless warning apparatus according to the first embodiment of the present disclosure;
FIG.5A is a schematic structural view of further another light-emitting element of the vehicle wireless warning apparatus according to the first embodiment of the present disclosure;
FIG.5B is a schematic structural view of further another light-emitting element of the vehicle wireless warning apparatus according to the first embodiment of the present disclosure;
FIG.6 is a schematic structural view of a vehicle wireless warning apparatus according to a second embodiment of the present disclosure;
FIG.7 is a block diagram of the vehicle wireless warning apparatus according to the second embodiment of the present disclosure;
FIG.8 is a schematic view of using a vehicle wireless warning apparatus according to a third embodiment of the present disclosure;
FIG.9 is a circuit diagram of the vehicle wireless warning apparatus according to the third embodiment of the present disclosure;
FIG. 10 is a circuit block diagram of the vehicle wireless warning apparatus according to the third embodiment of the present disclosure;
FIG.11 is a flowchart of a method of controlling the vehicle wireless warning apparatus according to the third embodiment of the present disclosure;
FIG. 12 is a schematic view of using the vehicle wireless warning apparatus corresponding to a magnetic element according to the third embodiment of the present disclosure;
FIG.13A is a schematic top view of a relative position between the vehicle wireless warning apparatus and the magnetic element according to the present disclosure;
FIG.13B is a schematic top view of another relative position between the vehicle wireless warning apparatus and the magnetic element according to the present disclosure;
FIG.13C is a schematic top view of further another relative position between the vehicle wireless warning apparatus and the magnetic element according to the present disclosure;
FIG. 14 is a flowchart of a method of installing the vehicle wireless warning apparatus according to the third embodiment of the present disclosure;
FIG. 15 is a schematic view of using a conventional vehicle wired lighting device; and
FIG. 16 is a schematic view of the vehicle wired lighting device of FIG. 15.

Reference will now be made to the drawing figures to describe the present disclosure in detail. However, the present disclosure may be still practiced under the premise of omitting part or all of detailed limitations. In addition, in order to avoid unnecessary limitations, the steps or elements as we all know are not described in detail. The same or similar elements in drawings will be represented by the same or similar symbols. In particular, drawings are merely illustrative of the present disclosure rather than limiting the scope of the present disclosure and representing the actual size or the number of the elements. Also, in order to make drawings simple and easy to understand, irrelevant details are not fully drawn.

A vehicle wireless warning apparatus without using a power source generated from the vehicle is disclosed. The vehicle wireless warning apparatus is used to warn both pedestrians and other vehicles by automatically turning on or off a light-emitting component installed on a frame edge of a vehicle door when the vehicle door is opened or closed.

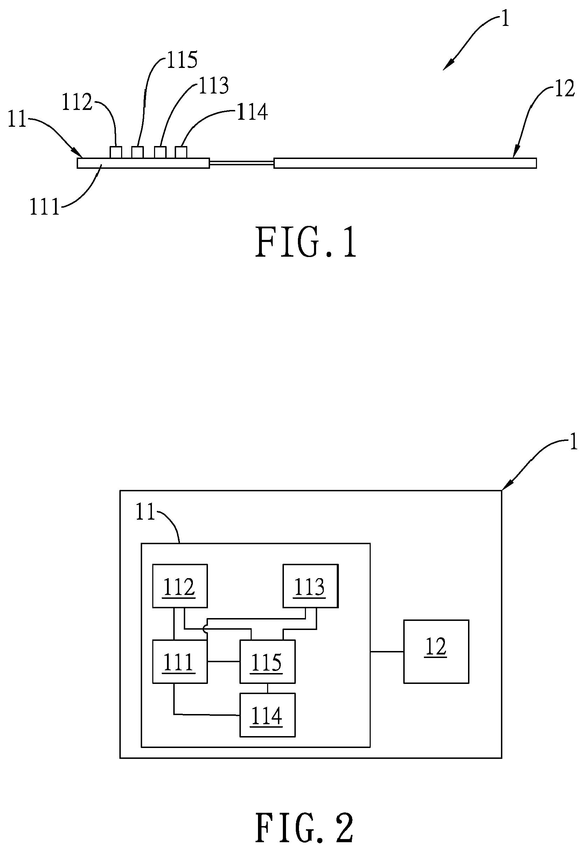

FIG. and FIG.2 show a schematic structural view and a block diagram of a vehicle wireless warning apparatus according to a first embodiment of the present disclosure, respectively. The vehicle wireless warning apparatus 1 includes a sensing control component 11 and a light-emitting component 12. The detailed description of the vehicle wireless warning apparatus 1 will be disclosed hereinafter as follows.

The vehicle wireless warning apparatus 1 is installed on a frame edge of a vehicle door, including a pushing/pulling door, a sliding door or an up-lift door. The sensing control component 11 includes a circuit board 111, a power module 112, a proximity switch 113, a gravity sensor 114 and a controller 115. The power module 112, the proximity switch 113, the gravity sensor 114 and the controller 115 are mounted on and electrically connected to the circuit board 111. The controller 115 is electrically connected to the power module 112, the proximity switch 113 and the gravity sensor 114 to receive signals outputted from these devices and control these devices. The power module 112 supplies required power to the vehicle wireless warning apparatus 1. The power module 112 may be composed of a battery component and at least one electricity-conducting part. In particular, the battery component is, but not limited to, a rechargeable battery. The proximity switch 113 is used to receive a sensing signal and the gravity sensor 114 is used to detect a movement signal of the sensing control component 11 in the longitudinal direction. The controller 115 is provided to control the light-emitting component 12 according to the sensing signal or the movement signal.

In one embodiment, the proximity switch 113, also called proximity sensor, may be one of an inductive sensor, a capacitive sensor, a photoelectric sensor, a contactless touch sensor and a magnetic sensor. Therefore, the light-emitting component 12 is controlled according to physical information sensed by the proximity switch 113 because of the varied distance between the vehicle door and the proximity switch 113. In another embodiment, the gravity sensor 114 is used to detect movement information in the longitudinal direction of the sensing control component 11. The controller 115 acquires the information sensed from the proximity switch 113 and/or the gravity sensor 114 to determine whether the vehicle door is opened or not.

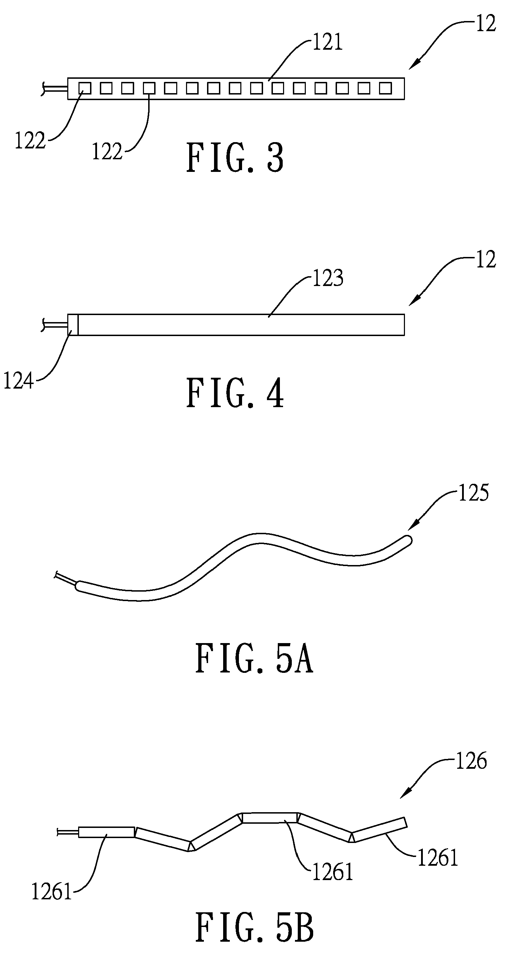

In one embodiment, any two of the proximity switch 113, the controller 115 and the gravity sensor 114 are integrated in a chip to reduce the occupied space of the circuit board 111. As shown in FIG.3, the light-emitting component 12 is an LED light bar which is formed by a substrate 121 and a plurality of light-emitting diodes 122 mounted on the substrate 121. As shown in FIG.4, the light-emitting component 12 is composed of a light-conducting strip 123 and a light source 124 installed at one end of the light-conducting strip 123. In order to meet a curved surface of the frame edge, a substrate 125 made of flexible materials is used for both the LED light bar and the light-conducting strip as shown in FIG.5A. As shown in FIG.5B, the light-emitting component 12 provides a bendable substrate 126 formed by a plurality of inflexible substrate sections 1261.

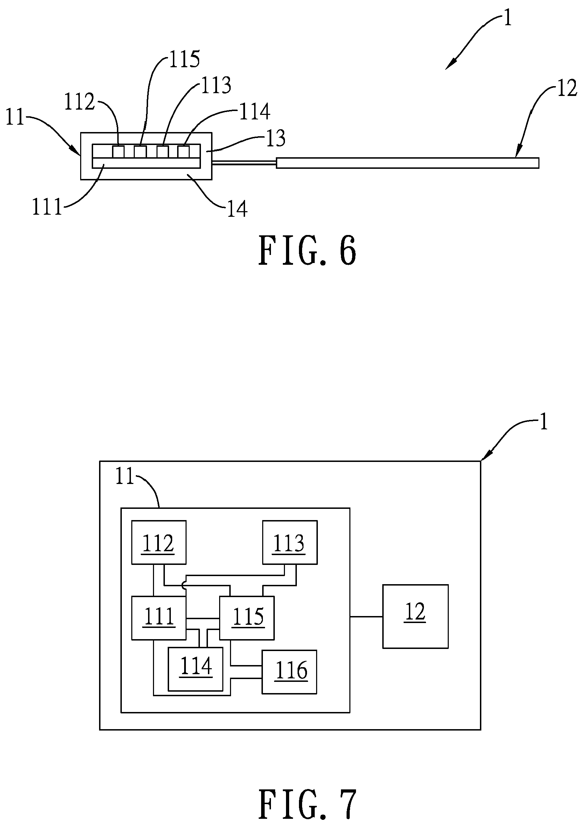

FIG.6 shows a schematic structural view of a vehicle wireless warning apparatus according to a second embodiment of the present disclosure. The sensing control component 11 further has an upper casing 13 and a lower casing 14. The upper casing 13 is engaged with the lower casing 14 to contain the circuit board 111, the power module 112, the proximity switch 113, the gravity sensor 114 and the controller 115 therein, thus protecting the circuit components from dust, mud or water. As shown in FIG.7, the sensing control component 11 further has a light sensor 116 disposed on the circuit board 111, and the light sensor 116 is used for sensing ambient light. When the light sensor 116 detects that the ambient light is too strong, the light-emitting component 12 may be turned off. On the contrary, the light-emitting component 12 is controlled to be turned on or off according to the open or closed conditions of the vehicle door when the light sensor 116 detects that the ambient light is too weak. Therefore, the electricity-saving operation of the vehicle wireless warning apparatus 1 is realized.

Accordingly, the proximity sensor or the contactless touch sensor is used instead of the wired lighting device controlled by the vehicle control system. To provide a variety of means of detecting the position information or movement information, the gravity sensor is used for detecting whether the up-lift vehicle door is moved in the longitudinal direction. In addition, the light sensor is used for sensing ambient light to decide whether the light-emitting component is enabled or not.

In conclusion, the vehicle wireless warning apparatus of the first embodiment is used to turn on or off the light-emitting component installed on the frame edge of the vehicle door by automatically detecting the vehicle door opening or closing, thereby warning both pedestrians and other vehicles.

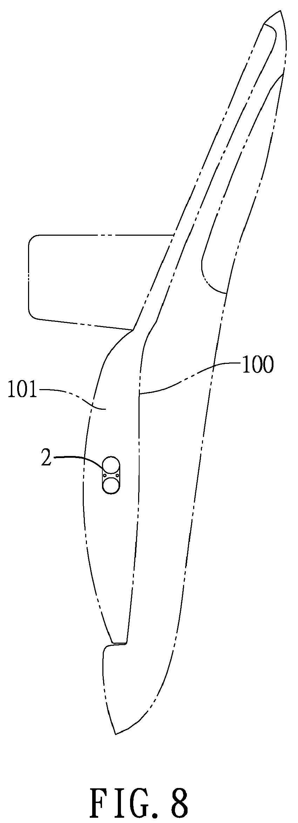

FIG.8 shows a schematic view of using a vehicle wireless warning apparatus according to a third embodiment of the present disclosure. The vehicle wireless warning apparatus 2 is installed on a frame edge 101 of a vehicle door 100. In particular, the vehicle wireless warning apparatus 2 may adhere to a surface of the frame edge 101 for simplicity and convenience in installing and adjusting.

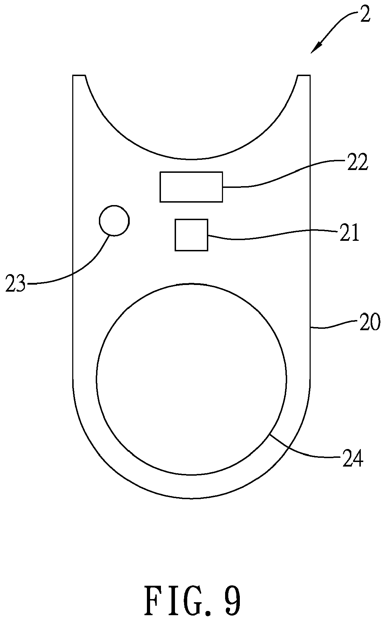

FIG.9 shows a circuit diagram of the vehicle wireless warning apparatus according to the third embodiment of the present disclosure. The vehicle wireless warning apparatus 2 includes a controller 21, a sensing unit 22, a display unit 23 and a battery unit 24. The controller 21, the sensing unit 22, the display unit 23 and the battery unit 24 are electrically disposed on a circuit board 20. In this embodiment, the controller 21 may be a micro control unit (MCU) or an integrated circuit (IC). The sensing unit 22 may be a proximity switch, also called proximity sensor. More specifically, the sensing unit 22 may be a magnetic sensor, a photoelectric sensor, an inductive sensor or a capacitive sensor. In addition, the sensing unit 22 may be a gravity sensor (G-sensor), or a combination of any two or more thereof. The detailed operation of the sensing unit 22 will be described hereinafter as follows.

The display unit 23 may be a light-emitting diode (LED), which has advantages of less electricity consumption, higher brightness and longer life span, and is controlled to provide effects of illuminating and flashing. The battery unit 24 may be a button cell battery, also called coin battery, a micro-type alkaline battery or a micro-type lithium battery, thereby minimizing the vehicle wireless warning apparatus 2.

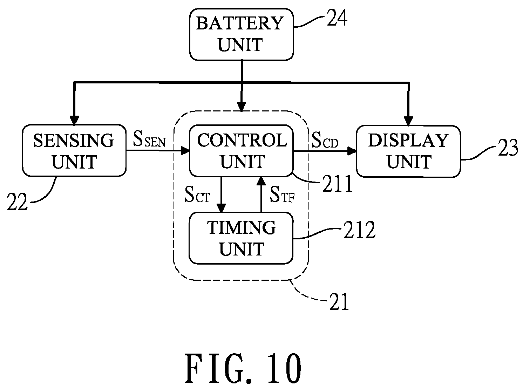

FIG. 10 shows a circuit block diagram of the vehicle wireless warning apparatus according to the third embodiment of the present disclosure. The controller 21 includes a control unit 211 and a timing unit 212. The battery unit 24 is electrically connected to the controller 21, the sensing unit 22 and the display unit 23 to supply required power to the controller 21, the sensing unit 22 and the display unit 23. The sensing unit 22 and the display unit 23 are electrically connected to the control unit 211 of the controller 21.

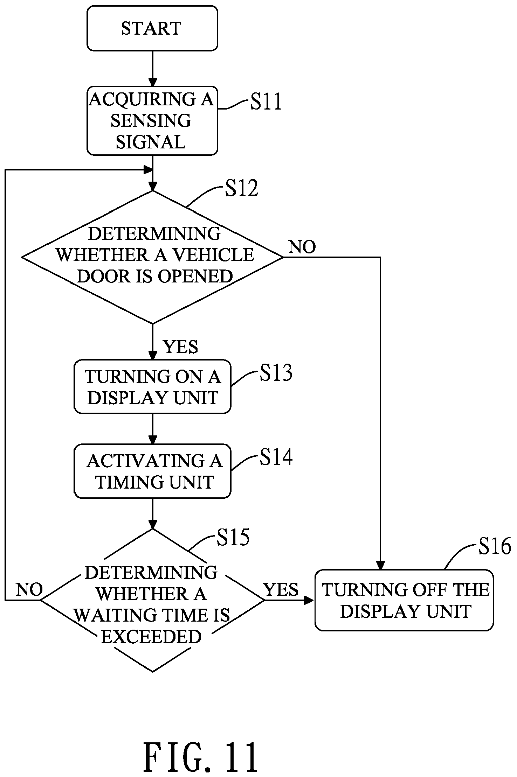

FIG.11 shows a flowchart of a method of controlling the vehicle wireless warning apparatus according to the third embodiment of the present disclosure. As mentioned, the sensing unit 22 is, but not limited to, the proximity switch for detecting whether any approaching object exists. Sensed physical information, such as the magnetic force value, capacitance value, inductance value or light flux value, is converted into a sensing signal S_{SEN}. The control unit 211 receives the sensing signal S_{SEN} outputted from the sensing unit 22 to acquire the sensing signal S_{SEN} (S11).

Afterward, the control unit 211 compares a sensing value, i.e., an amplitude of the sensing signal S_{SEN} with a threshold value internally generated by the control unit 211 to determine whether the vehicle door is opened (in an open condition) or not (S12). The sensed physical information, such as the magnetic force value, capacitance value, inductance value or light flux value, or even variations thereof is corresponding to the amplitude of the sensing signal S_{SEN} by detecting the position information or movement information of the vehicle door 100.

In one example, the capacitive proximity switch is exemplified for the sensing unit 22 for further demonstration as follows. The variation of the capacitance value or capacitive impedance value is sensed by the sensing unit 22 according to the movement of the object under detection. Also, the sensed variation of the capacitance value or capacitive impedance value is corresponding to the amplitude of the sensing signal S_{SEN}, i.e., the sensing value or a proximity value, which indicates the distance between the object under detection and the sensing unit 22. In this embodiment, the object under detection is a center pillar of the vehicle. When the sensing value is less than the threshold value, i.e., the control unit 211 determines that the center pillar is detected by the sensing unit 22, the control unit 211 determines that the vehicle door 100 is in the open condition. On the contrary, the control unit 211 determines that the vehicle door 100 is in the closed condition when the sensing value is greater than or equal to the threshold value, i.e., the control unit 211 determines that the center pillar is not detected by the sensing unit 22.

In another example, the gravity sensor is exemplified for the sensing unit 22 for further demonstrations as follows. The gravity sensor is installed on an up-lift vehicle door for detecting the position information or movement information in the longitudinal direction of the up-lift vehicle door to acquire an acceleration value. Further, the acceleration value is compared with the threshold value to determine that the up-lift vehicle door is in the open condition or the closed condition.

When determining that the vehicle door is in the open condition, the control unit 211 outputs a display control signal S_{CD} to turn on the display unit 23 (S13) and outputs a timing control signal S_{CT} to activate the timing unit 212 (S14). In the step (S 13), the display unit 23 continuously lights up when the vehicle door 100 is in the open condition, thereby warning both pedestrians and vehicles.

To take into account the electricity-saving operation of the vehicle wireless warning apparatus 2, the timing unit 212 is activated for time counting to generate a timing signal S_{TF} in the step (S14). The timing signal S_{TF} with a time-counting value is sent to the control unit 211 and then the control unit 211 compares the time-counting value with a waiting time, such as thirty seconds. The control unit 211 determines whether a lighting time of the display unit 23 exceeds the waiting time (S 15). When the vehicle door 100 is continuously opened over the waiting time, i.e., the vehicle door 100 is not closed within thirty seconds, the display control signal S_{CD} outputted from the control unit 211 is controlled to turn off the display unit 23 (S16). On the contrary, the step (S12) and the subsequent steps are re-executed when the control unit 211 determines that the lighting time of the display unit 23 does not exceed the waiting time. For example, if the vehicle door 100 is closed within thirty seconds after being opened, the display unit 23 is turned off, thus achieving the electricity-saving operation of the vehicle wireless warning apparatus 2.

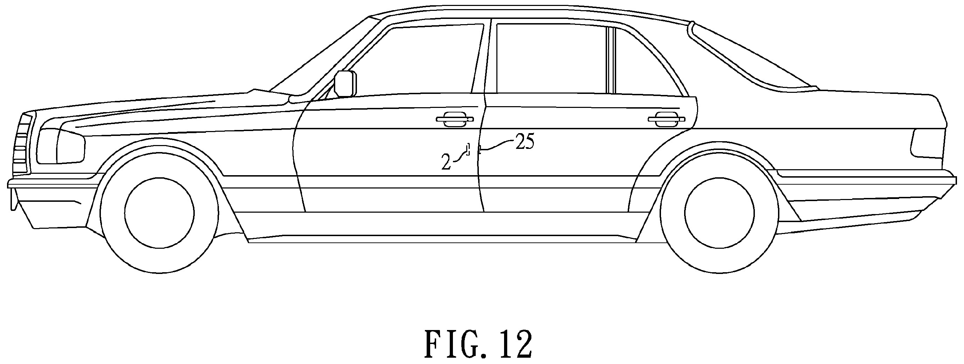

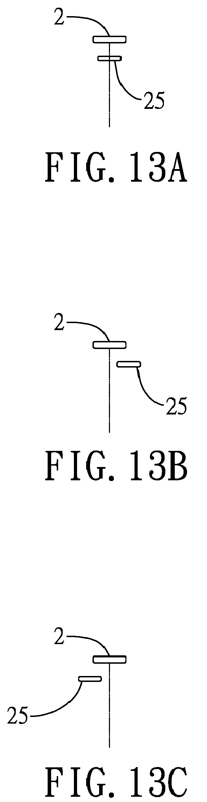

If the sensing unit 22 is the inductive proximity switch, the vehicle wireless warning apparatus 2 further includes a magnetic element 25 shown in FIG. 12 and FIG.13A to FIG.13C. In this embodiment, the magnetic element 25 is a permanent magnet. It is important to precisely install the vehicle wireless warning apparatus 2 since the relative position between the sensing unit 22 and the magnetic element 25 affects detection results of the sensing unit 22, i.e., the inductive proximity switch. The vehicle wireless warning apparatus 2 is installed on the frame edge 101 of the vehicle door 100 (shown in FIG.8) and the magnetic element 25 is installed on a center pillar of the vehicle (shown in FIG. 12). In this embodiment shown in FIG. 12, the magnetic element 25 is installed on the center pillar between the left front vehicle door and the left rear vehicle door and is also corresponding to the vehicle wireless warning apparatus 2 installed on the frame edge of the left front vehicle door.

FIG.13A shows a correct relative position between the vehicle wireless warning apparatus 2 and the magnetic element 25. However, FIG.13B and FIG.13C show incorrect relative positions between the vehicle wireless warning apparatus 2 and the magnetic element 25. For convenience, it is assumed that the vehicle wireless warning apparatus 2 is fixedly installed on the frame edge 101 of the left front vehicle door. Therefore, the installation position of the magnetic element 25 affects detection results of the sensing unit 22 of the vehicle wireless warning apparatus 2.

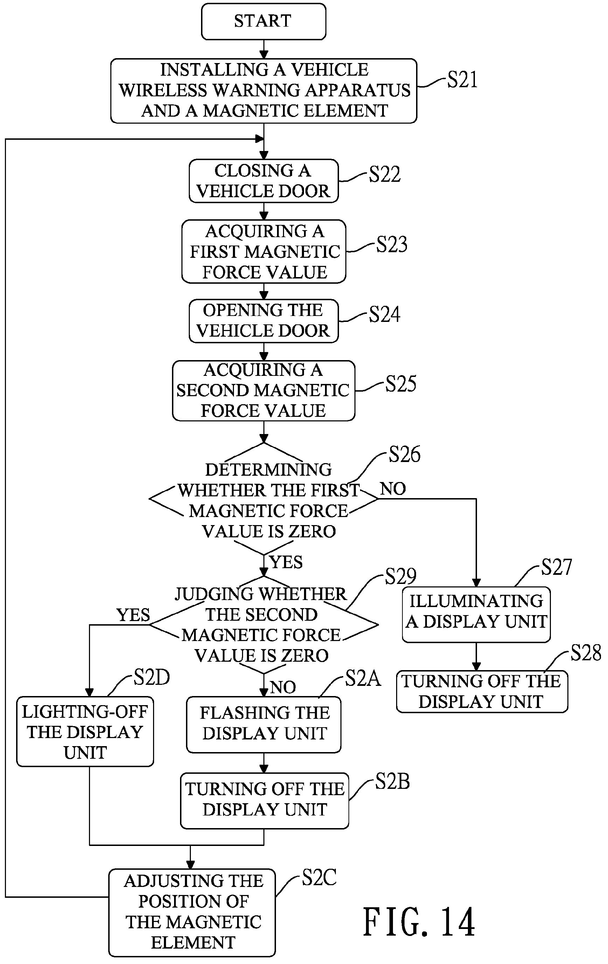

FIG. 14 shows a flowchart of a method of determining the relative positions between the vehicle wireless warning apparatus 2 and the magnetic element 25. First, the user, such as the driver, installs the vehicle wireless warning apparatus 2 and the magnetic element 25 on the frame edge 101 of the vehicle door 100 and the center pillar, respectively (S21). When the user closes the vehicle door 100 (S22), the sensing unit 22 senses a first magnetic force value (S23) and then the first magnetic force value is stored. Afterward, the user opens the vehicle door 100 (S24), the sensing unit 22 instantaneously senses a second magnetic force value (S25) and then the second magnetic force value is stored.

Afterward, the control unit 211 determines whether the first magnetic force value is zero (S26). If the first magnetic force value is not zero, it means that the sensing unit 22 instantaneously senses magnetic force generated from the magnetic element 25 when the vehicle door is closed. Therefore, the control unit 211 determines that the relative position between the sensing unit 22 and the magnetic element 25 is correct as shown in FIG.13A. Also, the display unit 23 is controlled to be illuminated by the control unit 211 according to the display control signal S_{CD} to indicate that the magnetic element 25 is correctly installed (S27). Similarly, under the consideration of the electricity-saving operation of the vehicle wireless warning apparatus 2, the display unit 23 is turned off (S28) after continuously illuminating within a predetermined time.

On the contrary, if the first magnetic force value is zero, the control unit 211 determines whether the second magnetic force value is zero (S29). If the second magnetic force value is not zero, it means that the sensing unit 22 instantaneously senses the magnetic force generated from the magnetic element 25 when the vehicle door is opened. Therefore, the control unit 211 determines that the relative position between the sensing unit 22 and the magnetic element 25 is not correct, i.e., the magnetic element 25 is outwardly installed as shown in FIG.13C. Also, the display unit 23 is controlled to flash by the control unit 211 according to the display control signal S_{CD} to indicate that the magnetic element 25 is not correctly installed (S2A). Similarly, under the consideration of the electricity-saving operation of the vehicle wireless warning apparatus 2, the display unit 23 is turned off (S2B) after continuously flashing within a predetermined time. Afterward, the position of the magnetic element 25 is adjusted (S2C), and the step (S22) and the subsequent steps are re-executed until the relative position between the sensing unit 22 and the magnetic element 25 is correct.

On the contrary, if the second magnetic force value is zero in the step (S29), it means that the sensing unit 22 does not sense the magnetic force generated from the magnetic element 25 when the vehicle door is opened. Therefore, the control unit 211 determines that the relative position between the sensing unit 22 and the magnetic element 25 is not correct, i.e., the magnetic element 25 is inwardly installed as shown in FIG.13B or the magnetic element 25 is upwardly or downwardly installed (not shown). Also, the display unit 23 is controlled to light off by the control unit 211 according to the display control signal S_{CD} to indicate that the magnetic element 25 is not correctly installed (S2D). Afterward, the position of the magnetic element 25 is adjusted (S2C), and the step (S22) and the subsequent steps are re-executed until the relative position between the sensing unit 22 and the magnetic element 25 is correct.

Accordingly, the relative position between the sensing unit 22 and the magnetic element 25 is accurately detected and/or adjusted before the vehicle wireless warning apparatus 2 is used, thus improving sensing accuracy of the sensing unit 22.

In conclusion, the present disclosure has the following advantages:
1. The absence of malfunction caused by circuit faults or circuit interferences and the shortening time of installing the vehicle wireless warning apparatus 2 are achieved since the vehicle wireless warning apparatus 2 is separated from the vehicle control system and the vehicle power supply;
2. The improvement of vehicle safety is implemented since the effects of illuminating and flashing the display unit 23 are generated to warn the rear vehicles and pedestrians;
3. The advantages of less electricity consumption, higher brightness and longer life span of the display unit 23 are realized; and
4. The relative position between the sensing unit 22 and the magnetic element 25 is accurately detected and/or adjusted before the vehicle wireless warning apparatus 2 is used, thus improving sensing accuracy of the sensing unit 22.

Although the present disclosure has been described with reference to the preferred embodiment thereof, it will be understood that the present disclosure is not limited to the details thereof. Various substitutions and modifications have been suggested in the foregoing description, and others will occur to those of ordinary skill in the art. Therefore, all such substitutions and modifications are intended to be embraced within the scope of the present disclosure as defined in the appended claims.

## Claims

1. A vehicle wireless warning apparatus (1) installed on a vehicle door (100), **characterized in that** the vehicle wireless warning apparatus (1) comprising:
a sensing unit (22) configured to wirelessly detect the vehicle door (100) being in an open condition or in a closed condition and accordingly output a sensing signal (S_{SEN});
a controller (21) comprising a control unit (211), the control unit (211) configured to generate a reference signal, receive the sensing signal (S_{SEN}) and compare the sensing signal (S_{SEN}) with the reference signal to output a display control signal (S_{CD});
a display unit (23) controlled by the display control signal (S_{CD}) received from the control unit (211); and
a battery unit (24) connected to the sensing unit (22), the controller (21), and the display unit (23), and configured to supply required power to the sensing unit (22), the controller (21), and the display unit (23).

2. The vehicle wireless warning apparatus (1) as claimed in claim 1, wherein the controller (21) further comprises:
a timing unit (212) connected to the control unit (211) and configured to receive a timing control signal (S_{CT}) obtained by comparing the sensing signal (S_{SEN}) with the reference signal;
wherein the control unit (211) is configured to control the timing unit (212) according to the timing control signal (S_{CT}) to control a lighting time of the display unit (23).

3. The vehicle wireless warning apparatus (1) as claimed in claim 1 or claim 2, wherein the control unit (211) is configured to turn on the display unit (23) according to the display control signal (S_{CD}) when the sensing unit (22) detects that the vehicle door (100) is in the open condition and an amplitude of the sensing signal (S_{SEN}) is less than an amplitude of the reference signal; otherwise the control unit (211) is configured to turn off the display unit (23) according to the display control signal (S_{CD}) when the sensing unit (22) detects that the vehicle door (100) is in the closed condition and the amplitude of the sensing signal (S_{SEN}) is greater than or equal to the amplitude of the reference signal.

4. The vehicle wireless warning apparatus (1) as claimed in claim 1, wherein the sensing unit (22) is one of a magnetic proximity switch, a photoelectric proximity switch, an inductive proximity switch, a capacitive proximity switch and a gravity sensor, or a combination of any two or more thereof.

5. The vehicle wireless warning apparatus (1) as claimed in claim 1, wherein the battery unit (24) is a button cell battery, a micro-type alkaline battery or a micro-type lithium battery.

6. A method of controlling a vehicle wireless warning apparatus (1) installed on a vehicle door (100), **characterized in that** the method comprising steps of:
wirelessly sensing the vehicle door (100) being in an open condition or in a closed condition to acquire a sensing signal (S_{SEN});
comparing the sensing signal (S_{SEN}) with a reference signal to acquire a display control signal (S_{CD}); and
controlling a display unit (23) of the vehicle wireless warning apparatus (1) according to the display control signal (S_{CD}).

7. The method of controlling the vehicle wireless warning apparatus (1) as claimed in claim 6, further comprising steps of:
acquiring a timing control signal (S_{CT}) in the step of comparing the sensing signal (S_{SEN}) with the reference signal; and
controlling a timing unit (212) of the vehicle wireless warning apparatus (1) according to the timing control signal (S_{CT}) to control a lighting time of the display unit (23).

8. The method of controlling the vehicle wireless warning apparatus (1) as claimed in claim 7, wherein the display unit (23) is turned on according to the display control signal (S_{CD}) when the vehicle door (100) is detected in the open condition and an amplitude of the sensing signal (S_{SEN}) is less than an amplitude of the reference signal; otherwise the display unit (23) is turned off according to the display control signal (S_{CD}) when the vehicle door (100) is detected in the closed condition and the amplitude of the sensing signal (S_{SEN}) is greater than or equal the amplitude of to the reference signal.

9. The method of controlling the vehicle wireless warning apparatus (1) as claimed in claim 8, wherein when the vehicle door (100) is in the open condition, the method further comprising steps of:
determining whether the lighting time of the display unit (23) exceeds a predetermined time; and
turning off the display unit (23) when the lighting time of the display unit (23) exceeds the predetermined time.

10. The method of controlling the vehicle wireless warning apparatus (1) as claimed in claim 9, further comprising a step of:
re-executing the step of comparing the sensing signal (S_{SEN}) with the reference signal when the lighting time of the display unit (23) does not exceed the predetermined time.
